## Europäisches Patentamt

## European Patent Office

## Office européen des brevets

(19)

(11) Veröffentlichungsnummer: **0 010 274**
**B1**

(12) **EUROPÄISCHE PATENTSCHRIFT**

(45) Veröffentlichungstag der Patentschrift:
24.06.81

(21) Anmeldenummer: 79103942.3

(22) Anmeldetag: 12.10.79

(51) Int. Cl.³: **B 09 B 3/00,** C 03 C 1/10,
C 03 C 3/00, C 03 C 3/24,
C 03 C 5/00

(54) Umweltentlastende Verwertung von verbrauchten wässrigen Kobalt/Mangan-acetat-Katalysatorlösungen.

(30) Priorität: 21.10.78 DE 2845916

(43) Veröffentlichungstag der Anmeldung:
30.04.80 Patentblatt 80/9

(45) Bekanntmachung des Hinweises auf die Patenterteilung:
24.06.81 Patentblatt 81/25

(84) Benannte Vertragsstaaten:
BE DE FR GB IT NL

(56) Entgegenhaltungen:
DD-A-69 675
DE-A-2 407 197
GLAS-EMAIL-KERAMO-TECHNIK, Jahrgang 24, Heft 5,
Mai 1973, G. WEINMANN: «Die Färbung des Glases»,
Seiten 141-147
CHEMICAL ABSTRACTS, Band 83, Nr. 11, 15. September 1975, Zusammenfassung Nr. 96684p, Seite 529, Columbus, Ohio, US

(73) Patentinhaber: RIEDEL-DE HAEN
AKTIENGESELLSCHAFT, Wunstorfer Strasse 40,
D-3016 Seelze 1 (DE)

(72) Erfinder: Jäger, Alfred, Dr., Possbergweg 50,
D-4000 Düsseldorf (DE)

(74) Vertreter: Meyer-Dulheuer, Karl-Hermann, Dr. et al,
HOECHST Aktiengesellschaft Zentrale Patentabteilung
Postfach 80 03 20, D-6230 Frankfurt/Main 80 (DE)

Umweltentlastende Verwertung von verbrauchten wässrigen Kobalt/Mangan-acetat-Katalysatorlösungen

Die Erfindung betrifft eine umweltentlastende Verwertung von verbrauchten wässrigen Kobalt/Mangan-acetat-Katalysatorlösungen, die im wesentlichen Kobaltacetat und Manganacetat neben organischen Verunreinigungen enthalten.

Bei der Herstellung von Dimethylterephthalat (DMT) werden zur Katalysierung der Reaktion wässrige Lösungen im Umlauf verwendet, die Kobaltacetat und Manganacetat im Verhältnis 20:1 bzw. 10:1 enthalten. Im Verlauf der Zeit verschmutzen sie durch ankondensierte organische Ausgangsstoffe der DMT-Herstellung, gleichzeitig nimmt die katalysierende Wirkung der Lösungen ab. Eine Reinigung mit einfachen Mitteln, z.B. durch Filtration, führt nicht zur Wiederherstellung der ursprünglichen Wirksamkeit.

Eine Wiederaufarbeitung zu Katalysatorlösungen der geforderten Wirksamkeit ist auf nasschemischem bzw. metallurgischem Weg nur mit einem Aufwand möglich, der den Wert käuflicher frischer Lösungen übersteigt. Die verbrauchten Katalysatorlösungen werden deshalb üblicherweise durch frische Lösungen ersetzt.

Daher stellte sich die Aufgabe diese verbrauchten Kobalt- und Manganacetat und organische Verunreinigungen enthaltenden Katalysatorlösungen wirtschaftlich zu verwerten.

Ein Ablassen in die Abwässer kommt aus Umweltschutzgründen nicht in Betracht. Ausfällung der Lösungsinhaltsstoffe und Ablagerung auf Rückstandsdeponien ist einerseits kostenaufwendig und andererseits wegen der Metallgehalte problematisch. Eine Verwertung in für Kobalt- bzw. Mangansalzen üblichen Einsatzgebieten erfordert immer die Trennung der beiden Metallkomponenten und ist wegen des damit verbundenen Aufwandes unwirtschaftlich.

Demgegenüber wurde nunmehr überraschend gefunden, dass eine umweltentlastende Verwertung von verbrauchten wässrigen Kobalt/Manganacetat-Katalysatorlösungen, die im wesentlichen Kobaltacetat und Manganacetat neben organischen Verunreinigungen enthalten, dadurch möglich ist, dass man die Lösungsinhaltsstoffe ohne weitere Aufreinigung Glas- oder Emaille-Schmelzflüssen bzw. Ansatzmischungen für Gläser, Glasuren, Emaillen oder Farbkörper zusetzt.

Es zeigte sich, dass der Mangananteil auf die physikalischen Eigenschaften so wenig Einfluss hat, dass er nicht stört. Im Gegenteil lassen sich durch Einsatz der manganhaltigen Kobaltverbindungen vorteilhaft Gläser herstellen, die im ultravioletten Bereich des Spektrums Strahlung absorbieren.

Gläser im Sinne der beanspruchten Verwertung sind Silikat-, Borat- und Borsilikatgläser, die zu Hohl-, Flach- oder Röhrenware für die Verwendung in Haushalt und Industrie, insbesondere Getränkeindustrie verarbeitet werden sollen.

Glasuren sind glasartige, farblose mit Metalloxiden gefärbte, durchsichtige oder deckende, glänzende oder matte Überzüge auf keramischen Erzeugnissen.

Emaillen sind Überzüge aus nicht zu Ende geschmolzenem Glas auf metallischer Unterlage, die dem Oberflächenschutz oder der Verzierung dienen.

Farbkörper sind in der Keramik für Verzierungen auf oder unter Glasuren verwendete keramische Farben, die aus mit feuerbeständig färbenden Metalloxiden verarbeitetem Quarz, Kaolin oder anderen keramischen Grundmaterialien bestehen. Smalten sind Farbkörper, die besonders gegen aggressiven Schmelzangriff beständig sind.

In einer bevorzugten Ausführungsform kann die Verwertung in der Weise erfolgen, dass die verbrauchten Katalysatorlösungen die Gehalte von 3,5–4,0% Co und 0,1–0,4% Mn aufweisen, ohne weitere Aufreinigung auf Glas- oder Emaille-Schmelzflüsse in feinverteilter Form, z.B. durch Verdüsen, aufgesprüht werden. Das in der Lösung enthaltene Wasser verdampft bei Berührung mit den Schmelzflüssen und die verbleibenden festen Lösungsinhaltsstoffe verteilen sich in der Schmelze. In dem Mass wie sie dabei erhitzt werden, werden die organischen Anteile verbrannt und es verbleiben die Oxide, die sich in der Schmelze unter Ausbildung von definierbaren und reproduzierbaren Farbeffekten lösen. Durch Zusatz anderer Metalloxide lassen sich diese Farbeffekte verändern und auf gewünschte Parameter einstellen.

Es hat sich gezeigt, dass auf diese Weise auch verdünntere Lösungen, als sie in dem genannten Prozess anfallen, verwertet werden können, z.B. mit einem Co-Gehalt von nur 3%. Bei zu niedrigen Metallgehalten überwiegt der Energieaufwand für die Verdampfung des Wasseranteils den Wert des eingebrachten Metalls.

In einer anderen Ausgestaltung der Erfindung werden die Lösungsinhaltsstoffe zunächst in fester Form gewonnen und dann Glas- oder Emaille-Schmelzflüssen bzw. Ansatzmischungen für Gläser, Glasuren, Emaillen oder Farbkörper zugesetzt.

Dies kann dadurch geschehen, dass die verbrauchte Katalysatorlösung in einem Sprühtrockner getrocknet wird. Dabei entsteht ein organisch verunreinigtes Kobalt/Mangan-Acetat mit einem Gehalt von 20–23% Co + 1–2% Mn, je nach Gehalt oder Ausgangslösung. Bei Zugabe des Acetats zu Glas- oder Emaille-Schmelzflüssen werden die organischen Bestandteile bei den herrschenden Temperaturen von über 1000 °C unter Bildung der Oxide verbrannt. Dabei werden $CO_2$ und $H_2O$ gebildet, die gasförmig entweichen.

Die Inhaltsstoffe der verbrauchten Katalysatorlösung können auch durch Karbonatfällung, z.B. mit Kohlensäure im Gegenstrom-Verfahren oder durch Zusatz von Natriumcarbonat bzw. Natriumhydrogencarbonat, in fester Form gewonnen werden. Der erhaltene Kobalt/Mangancarbonat-Schlamm kann abgezogen und ohne weitere Trocknung Glas- oder Emaille-Schmelzflüssen zugesetzt werden, z.B. indem er in pumpfähiger Form auf die Schmelzflüsse aufgedüst wird. Bei Temperaturen der Schmelze von mehr als 1000°C wird das Karbonatgemisch unter Abspaltung von $CO_2$ zu den Oxiden zersetzt. Das entweichende $Co_2$ fördert die Durchmischung der Schmelze.

Es ist jedoch auch möglich, den Karbonatschlamm ohne weitere Trocknung zu Ansatzmischungen für Gläser, Glasuren, Emaillen oder Farbkörpern zuzusetzen. Wenn diese Mischungen geschmolzen werden, tritt auch die beschriebene Zersetzung der Karbonate ein.

Der Karbonat-Schlamm kann auch getrocknet und gemahlen und in fester Form wie angegeben verwendet werden. Das ist in Betracht zu ziehen, wenn die erfindungsgemässe Verwertung nicht unmittelbar an dem Ort erfolgt, wo der Karbonatschlamm anfällt. Der Gehalt der getrockneten Karbonatschlämme schwankt je nach Ausgangslösung, Fällbedingungen und Trocknungsgrad und liegt bei 41–45% Co und 2 bis 4% Mn.

Eine andere Möglichkeit, die Lösungsinhaltsstoffe der verbrauchten Co/Mn-Katalysatorlösungen in fester Form zu gewinnen, besteht darin, die Lösung in der Flamme eines festen, flüssigen oder gasförmigen Brennstoffs zu verbrennen. So kann sie in die Flamme einer Kohlenstaubfeuerung, eines Öl- oder Gasbrenners eingedüst werden. Die Flugasche kann mit Hilfe eines Cyclons praktisch zu 100% abgeschieden werden. Sie enthält die Lösungsinhaltsstoffe als Oxide, d.h. vornehmlich als $Co_2O_3$ und $MnO_2$. So wurden Gemische mit 89,9% $Co_2O_3$ und 9,2% $MnO_2$ bezw. 49,7% $Co_2O_3$ und 5,0% $MnO_2$ erhalten, die frei waren von organischen Stoffen und die andere anorganische Stoffe nur in Spuren von unter 1% enthielten.

Die Oxide lassen sich in gleicher Weise in Glas- oder Emaille-Schmelzflüssen bzw. in Ansatzmischungen für Gläser, Glasuren, Emaillen oder Farbkörper zusetzen wie die Karbonate.

Die Erfindung soll in folgenden Beispielen näher erläutert werden, ohne sie jedoch im Einzelnen darauf zu beschränken:

Beispiel 1

1000 l einer 16% Kobaltacetat und 1,6% Manganacetat enthaltenden verbrauchten Katalysatorlösung (entsprechend 48,1 kg CoO und 5,7 kg $MnO_2$) werden innerhalb von 2 Stunden auf 1350 kg einer auf einer Temperatur von 1040°C gehaltenen Alkalisilikatglas-Schmelze aufgesprüht. Das Wasser der Lösung verdampft und die Schmelze nimmt eine blaue Farbe an. Die Glasschmelze kann zu einem im Ultraviolett-Bereich absorbierenden Hohlglas verarbeitet werden.

Beispiel 2

1000 l einer 16% Kobaltacetat und 0,8% Manganacetat enthaltenden verbrauchten Katalysatorlösung (entsprechend 48,1 kg CoO und 2,9 kg $MnO_2$) werden bei 80°C mit 70 kg Natriumhydrogencarbonat in wässriger Lösung versetzt. Der Niederschlag wird abgesaugt und mit Wasser gewaschen. Der Filterkuchen wird mit Wasser in eine pumpfähige Form überführt und innerhalb einer halben Stunde wie in Beispiel 1 angegeben, auf 1350 kg einer bei 1060°C gehaltenen Emaille-Schmelze gegeben, die nach folgender Rezeptur aufgebaut ist (die Zahlen geben, wie in der keramischen Industrie üblich, die Gramm-Mole der verwendeten Mischungsbestandteile an):

| | | |
|---|---|---|
| 0,11 $Na_2O$ | 0,46 $Al_2O_3$ | 2,5% fetter Ton. |
| 0,21 $K_2O$ | 3,28 $SiO_2$ | |
| 0,66 CaO | 0,88 $B_2O_3$ | |
| 0,02 MgO | | |

Der Wasseranteil des Schlamms verdampft und die Schmelze nimmt eine blaue Farbe an. Die Emaille-Schmelze kann zum Emaillieren chemischer Apparaturen verwendet werden.

Beispiel 3

Eine gemäss Beispiel 2 aus einer Katalysatorlösung, wie sie in Beispiel 1 verwendet wurde, hergestellte Karbonatfällung wird abgesaugt und bei 120°C getrocknet. Es wird ca. 90 kg eines 41% Co und 4% Mn enthaltenden Produktes erhalten, das gemahlen und zur Herstellung von Glasuren verwendet wird.

Dazu werden Glasurtypen der folgenden Rezepturen eingesetzt (die Zahlen geben die Gramm-Mole der verwendeten Mischungsbestandteile an):

| | | |
|---|---|---|
| Bleiglasur | | |
| 1,0 PbO | 0,07 $Al_2O_3$ | 1,87 $SiO_2$ |
| 5% fetter Ton | | |
| Bleiborglasur | | |
| 1,0 PbO | 0,63 $SiO_2$ | |
| | 0,92 $B_2O_3$ | 2,5% fetter Ton |
| Alkaliglasur | | |
| 0,11 $Na_2O$ | 0,46 $Al_2O_3$ | 3,28 $SiO_2$ |
| 0,21 $K_2O$ | | 0,88 $B_2O_3$ |
| 0,66 CaO | | |
| 0,02 MgO | | |
| 2,5% fetter Ton | | |
| deckende Glasur | | |
| 0,63 CaO | 0,48 $Al_2O_3$ | 3,1 $SiO_2$ |
| 0,37 ZnO | | 0,45 $B_2O_3$ |
| | | 0,56 $ZrO_2$ |

a) Die Glasurtypen werden mit je 3,2 Gew.-% Co, in Form des obigen Karbonats, gemischt und in Schmelztiegeln geschmolzen. Alle 4 Glasurtypen lassen sich ohne Schmelzfehler schmelzen.

b) Die Glasurtypen werden gemischt mit je 3,2 Gew.-% Co in Form des Karbonats, gemahlen und in Wasser aufgeschlämmt. Mit der Aufschlämmung werden Tonscherben bestrichen. Die Tonscherben werden bei 1040°C gebrannt. Es entstehen deckend gefärbte, dekorative Oberflächen, wie sie mit handelsüblichem Kobaltoxid erreicht werden.

### Beispiel 4

10 m³ einer 16% Kobaltacetat und 0,8% Manganacetat enthaltenden verbrauchten Katalysatorlösung (entsprechend 481 kg CoO und 29 kg $MnO_2$) werden in einer Feuerungsanlage mit Methan verdampft und verbrannt und die Flugasche in einem Cyclonfilter abgeschieden. Es werden ca. 500 kg eines Kobalt/Mangan-Oxidgemisches erhalten. Das Oxidgemisch wird zur Herstellung von Farbkörpern eingesetzt.

Dazu werden farbgebende Oxide in den unten angegebenen Molverhältnissen gemischt, in Trommelmühlen nass aufgemahlen, getrocknet und bei 1250 °C eine Stunde lang geglüht. Die gesinterten Farbkörper werden jeweils nass in Kugelmühlen vermahlen, dekantierend mit Wasser gewaschen und getrocknet.

| Farbkörper | Mischung |
|---|---|
| blau-grau | $Al_2O_3 \cdot 0,5\ CoO \cdot 0,5\ NiO$ |
| hell-blau | $SnO_2 \cdot 2,5\ CrO$ |
| dunkelblau | $0,8\ CoO \cdot 0,2\ Cr_2O_3 \cdot Al_2O_3$ |
| schwarz | $0,5\ Fe_2O_3 \cdot 0,25\ Cr_2O_3 \cdot 0,25\ CoO$ |

Die Farbkörper werden jeweils in Mengen von 4 Gew.-% Glasurtypen der in Beispiel 3 angegebenen Zusammensetzung zugemischt und die Mischung bei 1040 °C gebrannt. Die Farbkörper werden von den Glasuren schmelzfehlerfrei aufgenommen und geben bei Verwendung auf keramischen Oberflächen deckend färbende, dekorative Überzüge.

### Beispiel 5

Zur Herstellung einer Smalte wird ein gemäss Beispiel 4 gewonnenes Oxidgemisch mit Kaolin bzw. $Al_2O_3$-reichen Tonen gemischt (1,66 Gew.-% CoO auf 34 Gew.-% Kaolin), in einer Trommelmühle nass vermahlen, getrocknet und bei 1250 °C geglüht. Der Sinterkörper wird gemahlen und die so erzielte pulvrige Smalte im Gewichtsverhältnis 1:1 mit plastischem Ton gemischt. Die Mischung wird im Salzbrand bei 1240 °C gebrannt, wobei sich die Glasur während des Brennvorganges durch Anflug von NaCl-Dämpfen bildet. Es werden fehlerfreie Glasuren mit dem gewünschten Farbeffekt erhalten.

### Beispiel 6

Zur Herstellung von Emaillen werden nach den Angaben von Beispiel 4 hergestellte Farbkörper mit üblichen Emaille-Mischungen vermischt. Diese ähneln in der Zusammensetzung den in Beispiel 3 angegebenen Glasurtypen. Nach Auftrag der pulvrigen Emaillemischung auf Metalloberflächen verlaufen sie beim Brand zu gut deckenden gefärbten Emaille-Überzügen.

## Patentansprüche

1. Umweltentlastende Verwertung von verbrauchten wässrigen Kobalt/Manganacetat-Katalysatorlösungen, die im wesentlichen Kobaltacetat und Manganacetat neben organischen Verunreinigungen enthalten, dadurch gekennzeichnet, dass die Lösungsinhaltsstoffe ohne weitere Aufreinigung Glas- oder Emaille-Schmelzflüssen bzw. Ansatzmischungen für Gläser, Glasuren, Emaillen oder Farbkörper zugesetzt werden.

2. Verwertung nach Anspruch 1, dadurch gekennzeichnet, dass die Lösung auf Glas- oder Emaille-Schmelzflüsse aufgedüst und darin direkt zu den enthaltenen Oxiden zersetzt wird.

3. Verwertung nach Anspruch 1, dadurch gekennzeichnet, dass die Lösunsinhaltsstoffe in fester Form gewonnen und ohne weitere Aufreinigung Glas- oder Emaille-Schmelzflüssen bzw. Ansatzmischungen für Gläser, Glasuren, Emaillen oder Farbkörper zugesetzt werden.

4. Verwertung nach Anspruch 3, dadurch gekennzeichnet, dass die Lösungsinhaltsstoffe durch Sprühtrocknen in fester Form gewonnen werden.

5. Verwertung nach Anspruch 3, dadurch gekennzeichnet, dass die Lösungsinhaltsstoffe durch Karbonatfällung in fester Form gewonnen werden.

6. Verwertung nach Anspruch 3, dadurch gekennzeichnet, dass die Lösungsinhaltsstoffe durch Verbrennen der Lösung mit einem festen, flüssigen oder gasförmigen Brennstoff in Form der Oxide in fester Form gewonnen werden.

7. Verwertung nach Anspruch 1 bis 6, zur Herstellung Ultraviolettstrahlung absorbierender Gläser.

## Claims

1. Environmentally beneficial utilization of exhausted aqueous cobalt/manganese acetate catalyst solutions containing substantially cobalt acetate and manganese acetate in addition to organic impurities, which comprises adding the components contained in the solution without further purification to glass or enamel melts or starting mixtures for glasses, glazes, enamels or coloring substances.

2. Utilization as claimed in claim 1, wherein the solution is applied by atomization onto glass or enamel melts and thus decomposed directly to the oxides contained therein.

3. Utilization as claimed in claim 1, which comprises obtaining the components contained in the solution in solid form, and adding them without further purification to glass or enamel melts or starting mixtures for glasses, glazes, enamels or coloring substances.

4. Utilization as claimed in claim 3, which comprises obtaining the components contained in the solution in solid form by spray drying.

5. Utilization as claimed in claim 3, which comprises obtaining the components contained in the solution in solid form by precipitation with carbonate.

6. Utilization as claimed in claim 3, which comprises obtaining the components contained in the solution as oxides in solid form by burning the solution with a solid, liquid or gaseous fuel.

7. Utilization as claimed in claims 1 to 6 for the manufacture of glass absorbing ultraviolet radiation.

**Revendications**

1. Mise en valeur dépolluante de solutions aqueuses usées de catalyseurs à base d'acétate de cobalt/manganèse, qui contiennent essentiellement de l'acétate de cobalt et de l'acétate de manganèse ainsi que des impuretés organiques, mise en valeur caractérisée en ce qu'on ajoute les ingrédients de la solution, sans autre purification, à des mélanges fondus de verres ou d'émaux ou à des mélanges de composition pour verres, glaçures, émaux ou corps colorants.

2. Mise en valeur selon la revendication 1, caractérisée en ce qu'on pulvérise la solution sur des mélanges fondus de verres ou d'émaux où elle est directement décomposée en les oxydes correspondants.

3. Mise en valeur selon la revendication 1, caractérisée en ce que les ingrédients de la solution sont isolés à l'état solide et, sans autre purification, sont ajoutés à des mélanges fondus de verres ou d'émaux ou à des mélanges de composition pour verres, glaçures, émaux ou corps colorants.

4. Mise en valeur selon la revendication 3, caractérisée en ce que les ingrédients de la solution sont isolés à l'état solide par séchage par pulvérisation.

5. Mise en valeur selon la revendication 3, caractérisée en ce que les ingrédients de la solution sont isolés à l'état solide par précipitation au carbonate.

6. Mise en valeur selon la revendication 3, caractérisée en ce que les ingrédients de la solution sont isolés à l'état solide sous la forme des oxydes par combustion de la solution avec un carburant solide, liquide ou gazeux.

7. Mise en valeur selon l'une quelconque des revendications 1 à 6, pour la préparation de verres absorbant le rayonnement dans le domaine de l'ultraviolet.